# EUROPÄISCHE PATENTANMELDUNG

(11) **EP 0 558 817 A2**
(43) Veröffentlichungstag der Anmeldung: **08.09.1993**
(21) Anmeldenummer: 92121736.0
(22) Anmeldetag: 21.12.1992
(51) Int. Cl.: B23Q 11/00, F16L 37/00

(54) **Hohlbohrer mit Vorrichtung zur Staubentsorgung**

(30) Priorität: 29.02.1992 DE 4206351
(71) Anmelder: KAISER GMBH. & CO. KG, D-58579 Schalksmühle (DE)
(72) Erfinder: Purschke, Helmut, W-5885 Schalksmühle (DE); Purschke, Norbert, W-5885 Schalksmühle (DE)
(74) Vertreter: Buse, Karl Georg, Dipl.-Phys.

(57) **Zusammenfassung**

Es handelt sich um eine Schleifkrone (10), insbesondere Diamantschleifkrone für Mauerwerkseinbauöffnungen im Trockenschliffverfahren. Diese Schleifkrone (10) ist ein im Querschnitt U-förmiger Körper, der lösbar mit einem Zwischenstück, wie einer Bohrfutteraufnahme (31), zur Kupplung einer Bohrmaschine verbunden werden kann. Dabei ist das Zwischenstück drehbar und dicht in einem Hohlkörper gelagert, und die Schleifkrone (10) ist mit einem Zentrierbohrer und mit im Bereich ihrer Oberseite liegenden Ableitungen für Bohrstaub versehen. Ein Anschluß an einem Staubsauger ist möglich, um eine Ableitung des anfallenden Bohrkleins zu erzielen. Die Decke (14) der Schleifkrone (10) weist erfindungsgemäß selbst die außerhalb ihrer Mitte liegenden Durchbrechungen (17) auf. Diesen Durchbrechungen (17) der Schleifkrone (10) ist eine haubenartige Auffangeinrichtung (19) derart nachgeschaltet, daß ihr unterer Bereich (25) die Decke (14) der Schleifkrone (10) allseitig übergreift. An den Befestigungsbereich (25) der Auffangeinrichtung (19) schließt sich ein kegeliger Mittelteil (21) mit einem großen Aufnahmeraum für den Bohrstaub an. Die Umfangsfläche dieses kegeligen Mittelteils ist an einer Stelle für die Schaffung eines Einlasses für einen Anschlußstutzen (12) unterbrochen.

## Beschreibung

Die Erfindung bezieht sich auf eine Schleifkrone, insbesondere Diamantschleifkrone, für Mauerwerks-Einbauöffnungen im Trockenschliffverfahren, die als im Querschnitt U-förmiger Körper ausgebildet und lösbar mit einem Zwischenstück, wie einer Bohrfutteraufnahme, zur Kupplung mit einer Bohrmaschine verbindbar ist, wobei das Zwischenstück drehbar und dicht in einem Hohlkörper gelagert ist, und wobei die Schleifkrone mit einem Zentrierbohrer und mit im Bereich ihrer Oberseite liegenden Ableitungen für Bohrstaub versehen ist, und die einen an einem Staubsauger od.dgl. anschließbaren Ableitungsdurchgang aufweist.

Schleifkronen dieser Art gibt in mannigfachen Ausführungsformen. So ist eine Schleifkrone durch die DE 38 41 871 A1 bekanntgeworden. Bei dieser bekannten Ausführungsform ist die Schleifkrone auf das untere, mit einem Gewinde versehenen Ende des Zwischenstückes aufgeschraubt. Zu der Schleifkrone gehört ein ringförmiges Anschlußstück, welches mit einem Innengewinde versehen ist und auf das Außengewinde am unteren Ende des Zwischenstückes aufgeschraubt werden kann. Das im Querschnitt runde Zwischenstück ist mit einem zentralen Sackbohrloch versehen, das von dem schleifkronenseitigen Ende ausgeht und sich bis in Nähe des maschinenseitigen Endes erstreckt. In dem oberen Abschnitt ist das Zwischenstück unter Bildung eines Hohlraumes drehbar und dicht in einer Hülse gelagert, die quer zum Zwischenstück angeordnet und mit einem Anschlußstutzen versehen ist, über den der Hohlraum mit einer Unterdruckquelle, z.B. einem Staubsauger, verbunden werden kann. In der Wandung des Zwischenstückes sind mehrere Durchtrittsöffnungen vorgesehen, über die der Hohlraum mit der zentralen Bohrung und damit mit dem Innenraum der Schleifkrone verbunden werden kann.

An sich hat diese bekannte Schleifkrone den Vorteil, daß ein Absaugen des sogenannten Bohrkleins mittels eines Staubsaugers erfolgen kann; darüber hinaus erfolgt eine ständige Kühlung der Schleifkrone. Auf der anderen Seite hat diese bekannte Ausführungsform der Schleifkrone den Nachteil, daß das Absaugen des Bohrkleins über das mittig angeordnete Sackbohrloch erfolgt. Durch diese mittige Anordnung ist es bei der bekannten Schleifkrone nicht möglich, dort einen Zentrierbohrer einzusetzen. Darüber hinaus ist die Querschnittsfläche des Sackbohrloches ziemlich klein, was sich negativ auf die abzusaugende Menge des Bohrkleins auswirkt. Darüber hinaus muß das in das Sackbohrloch gelangende Bohrklein in diesem eine Umlenkung um 90° erfahren. Dies deshalb, weil im Bezug auf die Längsachse des Sackbohrloches die in den Wandungen befindlichen Löcher senkrecht dazu angeordnet sind. Auf diese Weise entstehen tote Räume und Ecken, in denen eine nicht gewünschte Ablagerung des Bohrkleins erfolgen kann.

Offenkundig vorbenutzt ist ferner eine Diamanttrockenbohrkrone, die an ihrem rückwärtigen Ende einen Anschlußzapfen für eine handelsübliche Bohrmaschine aufweist. Darüber hinaus können mit dieser bekannten Bohrkrone Diamanttrockenbohrkronen unterschiedlichen Durchmessers benutzt werden. Zu den Zubehörgeräten bei dieser Ausführungsform gehört auch ein Zentrierbohrer.

Durch die DE 85 21 377 U1 ist eine Diamantschleifkrone mit den eingangs erwähnten Merkmalen bekanntgeworden. In dieser Druckschrift ist ein Kronenbohrwerkzeug zum vorzugsweise Bohren in Gestein, Mauerwerk od.dgl. in zwei Ausführungsformen wiedergegeben. Von diesen beiden Ausführungsformen interessiert nur diejenige, die ein Kronenbohrwerkzeug zeigt, welches mit einer Einrichtung zum Absaugen des Bohrmehls, Bohrkleins od.dgl. versehen ist. Dieses bekannte Kronenbohrwerkzeug besteht aus einer Aufnahme und einer daran lösbar befestigten zylindrischen Bohrkrone sowie einem Zentrierbohrer. Der Zentrierbohrer hat einen zylindrischen Spannschaft, der mit seinem rückwärtigen Ende in die durchlaufende zentrale Bohrung der Aufnahme eingreift. Es ist ferner eine Einrichtung vorhanden, die zum Einspannen der Bohrkrone in dem Spannfutter einer bekannten Handbohrmaschine dient.

Die Aufnahme dieses bekannten Kronenbohrwerkzeuges ist so gestaltet, daß durch sie hindurch das anfallende Bohrmehl od.dgl. abgesaugt werden kann. Um dieses zu ermöglichen, hat die Aufnahme wenigstens einen, vorzugsweise aber zwei, im wesentlichen axiale Ableitungsdurchgänge in Nähe ihres Umfanges. Ferner ist die Aufnahme hinter ihrem Befestigungsabschnitt für die Bohrkrone mit einer Absetzung versehen, in der ein Ringkörper derart gelagert ist, daß er die im Durchmesser kleinere Absetzung koaxial und drehbar umgibt. Dieser Ringkörper liegt einerseits an einer Schulter der Aufnahme an und ist andererseits durch eine lösbare Ringsicherung in seiner Axiallage gesichert. Da sich im Betrieb des Bohrwerkzeuges die Aufnahme relativ zu dem Ringkörper dreht, kann zwischen diesen Teilen ein Gleitlager oder auch ein Wälzlager vorgesehen sein.

An den Ringkörper dieser bekannten Ausführungsform des Kronenbohrwerkzeuges schließt sich ein radial abstehender Handgriff an, der z.B. mittels einer Gewindeverbindung mit dem Ringkörper verbunden ist. Sowohl der Ringkörper selbst als auch der zugeordnete Handgriff sind je mit einem Ableitungsdurchgang versehen, wobei diese beiden Durchgänge miteinander und mit den Ableitungsdurchgängen der Aufnahme kommunizieren. Daraus ergibt sich, daß der Ableitungsdurchgang des Ringkörpers aus einer Ringnut besteht, die zu dem die Bohrkrone tragenden Abschnitt der Aufnahme hin offen ist. Ein radialer Auslaß im einen Schraubende des Handgriffes bildet den Anfang des Durchganges; er schließt sich an die Ringnut an.

Bei dieser bekannten Ausführungsform des Kronenbohrwerkzeuges hat das eigentliche Werkzeug praktisch keine Decke. Vielmehr wird diese einmal durch Teile der Aufnahme und zum anderen durch den Ringkörper mit den Durchgängen gebildet. Bei diese bekannten Ausführungsform des Kronenbohrwerkzeuges kann dieses somit selbst keine Decke aufweisen, sondern die Durchbrechungen sind Bestandteil einmal der Aufnahme und zum anderen des Ringkörpers. Dadurch muß die Anordnung der Durchgänge so getroffen sein, daß sie korrespondieren. Nachteilig ist bei dieser bekannten Ausführungsform des Kronenwerkzeuges, daß ein scharfes Umlenken beim Abführen des Bohrkleines in den korrespondierenden Durchgängen erfolgen muß, insbesondere bei dem Übergang in den Durchgang des Handgriffes. Darüber hinaus steht auch in der Aufnahme selbst und in dem Ringkörper der bekannten Schleifkrone verhältnismäßig wenig Raum zur Unterbringung des Bohrkleins zur Verfügung.

Der Erfindung liegt die Aufgabe zugrunde, Schleifkronen, insbesondere Diamantschleifkronen, der eingangs näher gekennzeichneten Art weiterzuverbessern. Dies gilt insbesondere für die Führung und Weiterleitung des beim bestimmungsgemäßen Gebrauch entstehenden Bohrkleins. Dabei sollen auch problemlos größere Mengen an anfallendem Bohrklein abgesaugt werden können, wobei die Führungsmittel so eingerichtet sein sollen, daß keine toten Räume od.dgl. entstehen, in denen sich Restmengen des Bohrkleins festsetzen können. Darüber hinaus soll die Schleifkrone so gestaltet werden, daß sie an unterschiedlich dimensionierte Schläuche von handelsüblichen Staubsaugern angeschlossen werden kann.

Zur Lösung dieser Aufgabe wird erfindungsgemäß vorgeschlagen, daß die Decke der Schleifkrone selbst die außerhalb ihrer Mitte liegenden Durchbrechungen aufweist, und daß diesen Durchbrechungen der Schleifkrone eine haubenartige Auffangeinrichtung derart nachgeschaltet ist, daß ihr unterer Bereich die Decke der Schleifkrone allseitig übergreift, und daß sich daran ein kegeliger Mittelteil mit einem großen Aufnahmeraum für den Bohrstaub anschließt, dessen Umfangsfläche an einer Stelle für die Schaffung eines Einlasses für einen Anschlußstutzen unterbrochen ist.

Die erfindungsgemäße Schleifkrone hat gegenüber dem Bekannten erhebliche Vorteile. So ist zunächst die erfindungsgemäße Staubabsaugung universell für die Durchmesser 68 und 82 mm Diamantschleifkrone konzipiert. Die Staubabsaugung sitzt im Gegensatz zum Bekannten direkt auf der Diamantschleifkronenstirnseite und saugt somit den Staub axial in die Absaugung, ohne das Hemmnis von 90° überwinden zu müssen. Da die erfindungsgemäße Schleifkrone an ihrer Decke liegend mit mehreren Durchbrechungen versehen ist, wird im Vergleich mit dem Bekannten nicht nur eine mehrfache Vergrößerung der zur Absaugung zur Verfügung stehenden Querschnittsfläche erzielt, sondern darüber hinaus ist auch die Mitte der Decke von Durchbrechungen frei, so daß dort in an sich bekannter Weise ein Zentrierbohrer angebracht werden kann, was für das Arbeiten mit der Bohrschleifkrone von Vorteil ist. Das durch die Durchbrechungen der Decke der Schleifkrone durchtretende Bohrklein gelangt in die haubenartige Auffangeinrichtung. Dies bedeutet, daß ein großvolumiger Aufnahmeraum für das Bohrklein zur Verfügung steht, wobei an der Umfangsfläche der Wandung des Aufnahmeraumes der Anschlußstutzen angebracht ist. Dieser dient seinerseits in grundsätzlich bekannter Weise zum Herstellen einer Verbindung mit dem Schlauch eines Staubsaugers.

Ein Auswechseln der Diamantschleifkrone bei der erfindungsgemäß ausgebildeten Schleifkrone ist in einfachster Weise durchzuführen, weil zur Auswechslung lediglich zwei Maulschlüssel erforderlich sind. Dem gegenüber muß bei der bekannten Ausführungsform der Schleifkrone nach DE 85 21 577 U1 die gesamte Einheit einschließlich des Bohrers ausgetauscht werden, was sehr aufwendig und kostspielig ist.

Bei der bevorzugten Ausführungsform der Erfindung schließt sich an dem durchmessermäßig kleineren Endteil des Kegels der Auffangeinrichtung ein oberer zylindrischer Bereich an, der einen Zwischenraum zur Unterbringung der Verbindungsmittel zwischen der Bohrfutteraufnahme und der Auffangeinrichtung freiläßt.

Als Verbindungsmittel dient in an sich bekannter Weise ein Kugellager, das durch mehrere Sicherungsringe oder durch mehrere Vorsprünge lagegesichert ist.

Nach einem weiteren Vorschlag der Erfindung weist die Decke der Schleifkrone in ihrer Mitte liegend einen Stutzen auf, dessen Innengewinde mit dem Außengewinde der Bohrfutteraufnahme verbindbar ist, und die durchlaufende Bohrung des Stutzens wird von dem rückwärtigen Ende eines Zentrierbohrers durchgriffen, der durch ein Halteelement der Bohrfutteraufnahme lagegesichert ist.

Es empfiehlt sich, die Durchbrechungen in der kreisförmigen Decke der Schleifkrone konzentrisch zum Mittelpunkt der Decke anzuordnen und sie in Draufsicht gesehen kreisförmig zu gestalten. Ferner ist es zweckmäßig, wenn die Durchbrechungen untereinander gleichgestaltet sowie in regelmäßiger Anordnung im Bezug auf den Mittelpunkt der Decke der Schleifkrone liegen.

In der Praxis gibt es zahlreiche Ausführungsformen von Staubsaugern, die zum Zwecke des Absaugens der beim bestimmungsgemäßen Gebrauch der Schleifkrone entstehenden Bohrkleins herangezogen werden können. Diese bekannten Staubsauger haben Schläuche mit unterschiedlichen Durchmessern. Um alle auf den Markt befindlichen Staubsauger mit Absaugeschlauch zum Absaugen des Bohrkleins der erfindungsgemäßen Schleifkrone benutzen zu können, sind Vorkehrungen getroffen, die eine Anpassung an unterschiedliche Schlauchdurchmesser zulassen. Zu diesem Zweck ist dem Anschlußstutzen der haubenartigen Auffangeinrichtung lösbar ein Einsatzkörper zugeordnet, der seinerseits mit der Umfangsfläche eines Saugschlauches dichtend zusammenwirkt. Dabei empfiehlt es sich, diesen Einsatzkörper als Gummieinsatz auszubilden, der einen Befestigungsteil und einen Dichtungsteil aufweist. Der Dichtungsteil seinerseits hat wenigstens eine Dichtlippe, die einen Durchbruch aufweist, dessen Durchmesser kleiner ist, als der des einzuführenden Saugschlauches.

Die bevorzugte Ausführungsform des Einsatzkörpers kennzeichnet sich durch die Hintereinanderanordnung von mehreren Dichtlippen am Einsatzkörper. Die hintereinander angeordneten Dichtlippen haben einen unterschiedlichen Durchmesser, so daß damit eine Anpassung an unterschiedliche Schlauchdurchmesser möglich ist.

Es empfiehlt sich, an der Außenfläche des Befestigungsteiles des Einsatzkörpers Verbindungselemente anzuordnen, die mit Haltemitteln des Anschlußstutzens zusammenwirken. Als Haltemittel können dabei in der Technik gebräuchliche Einrichtungen verwendet werden.

Nach einem weiteren Vorschlag der Erfindung ist im zylindrischen Bereich der Auffangeinrichtung ein Unterbringungsraum für ein Kugellager angeordnet, das sich einerseits an einer Auflagefläche und andererseits an Vorsprüngen der Innenwand des zylindrischen Bereiches abstützt.

Auf der Zeichnung ist die Erfindung in mehreren Ausführungsbeispielen dargestellt, und zwar zeigen:
- Fig. 1: teilweise in Ansicht, teilweise im Schnitt eine erfindungsgemäße Schleifkrone mit der zugeordneten Auffangeinrichtung,
- Fig. 2: eine Unteransicht der Auffangeinrichtung bei entfernter Schleifkrone,
- Fig. 3: eine Draufsicht auf die Decke der Schleifkrone bei abgenommener Auffangeinrichtung,
- Fig. 4: einen Schnitt durch eine zweite Ausführungsform einer Auffangeinrichtung für eine Schleifkrone und
- Fig. 5: eine Draufsicht auf die Auffangvorrichtung nach der Fig. 4 der Zeichnung, ebenfalls bei fehlender Schleifkrone.

Es sei zunächst erwähnt, daß in den Figuren der Zeichnungen nur diejenigen Teile einer Schleifkrone, insbesondere Diamantschleifkrone dargestellt sind, welche für das Verständnis der Erfindung von Bedeutung sind. So fehlt in den Figuren der Zeichnungen insbesondere die Darstellung einer Bohrmaschine und eines Staubsaugers, die in Verbindung mit der Schleifkrone benutzt werden. Diese Teile sind deshalb fortgelassen, weil sie eine grundsätzlich bekannte Ausbildung haben können. Insbesondere können handelsübliche, also auf dem Markt befindliche Bohrmaschinen und auch Staubsauger angeschlossen werden. Das Anschließen der handelsüblichen Bohrmaschine geschieht dabei an einer vorgesehenen Bohrfutteraufnahme der Schleifkrone. Der Schlauch des Staubsaugers handelsüblicher Bauart kann dagegen an den Anschlußstutzen der Auffangeinrichtung der Schleifkrone lösbar angeschlossen werden.

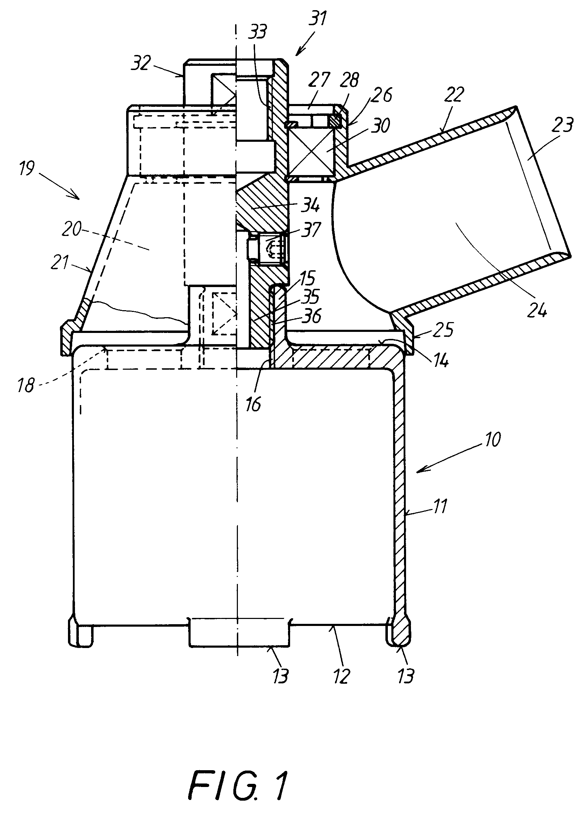

In den Fig. 1 bis 3 der Zeichnung ist ein erstes Ausführungsbeispiel der Erfindung dargestellt. Die Schleifkrone ist dabei generell mit 10 bezeichnet. Sie hat eine Umfangswand 11, die nach der einen Seite hin offen ist. Diese Seite ist in der Fig. 1 der Zeichnung als freies Ende 12 der Schleifkrone 10 bezeichnet. An der Stirnfläche des freien Endes 12 der Schleifkrone 10 sind in bekannter Weise mehrere Verdickungen 13 vorgesehen, die mit den eigentlichen Arbeitswerkzeugen - den Diamanten - bestückt sind. Auf die zeichnerische Darstellung dieser eigentlichen Arbeitswerkzeuge ist verzichtet, weil es sich um bekannte Ausführungsformen handelt. Es sei lediglich erwähnt, daß im gewählten Ausführungsbeispiel an insgesamt vier jeweils um 90° versetzt zueinander angeordneten Stellen derartige Verdickungen 13 vorgesehen sind, vergl. dazu auch die Fig. 3 der Zeichnung.

Auf der dem freien Ende 12 gegenüberliegenden anderen Seite hat die Schleifkrone 10 eine generell mit 14 bezeichnete Decke. In der Mitte dieser Decke ist ein Stutzen 15 angebracht, der mit einem Innengewinde 16 versehen ist. Das Innengewinde 16 des Stutzens 15 wirkt mit dem Außengewinde 36 einer generell mit 31 bezeichneten Bohrfutteraufnahme zusammen. Gemäß der Fig. 1 der Zeichnung ist das Außengewinde 36 der Bohrfutteraufnahme 31 in das Innengewinde 16 des Stutzens 15 der Schleifkrone eingeschraubt, so daß damit eine lösbare Verbindung hergestellt ist.

Die Fig. 3 der Zeichnung läßt am besten erkennen, daß die Decke 14 der Schleifkrone 10 mit einer Vielzahl von Durchbrechungen 17 versehen ist. Diese Durchbrechungen 17 sind in der kreisförmigen Decke 14 der Schleifkrone 10 konzentrisch zum Mittelpunkt M der Decke 14 angeordnet. Im gewählten Ausführungsbeispiel sind die Durchbrechungen 17 der Decke 14 der Schleifkrone 10 in Draufsicht gesehen kreisförmig gestaltet. Sie sind ferner untereinander gleichgestaltet und in regelmäßiger Anordnung in bezug auf den Mittelpunkt M der Decke 14 der Schleifkrone 10 angeordnet. Diese symmetrische Anordnung erleichtert die Herstellung der Schleifkrone 10 mit den Durchbrechungen 17 in ihrer Decke 14.

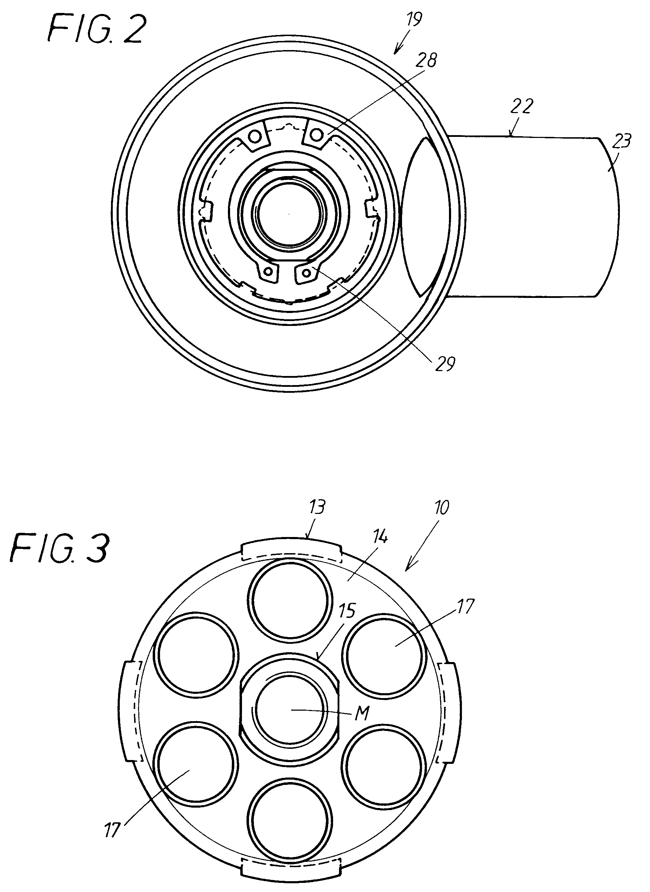

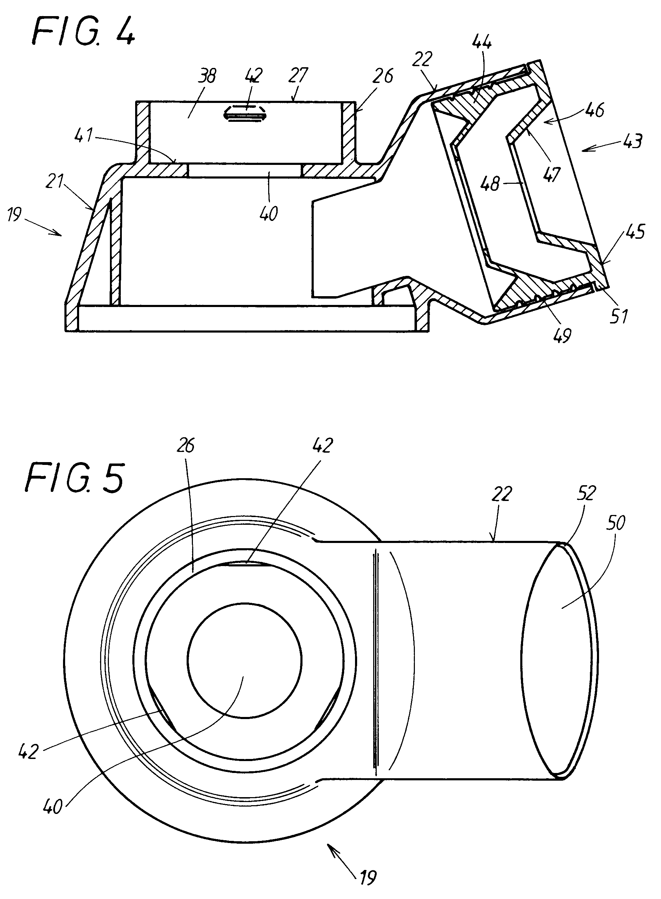

Aus der Fig. 1 der Zeichnung ergibt sich, daß der Decke 14 der Schleifkrone 10 eine generell mit 19 bezeichnete Auffangeinrichtung nachgeschaltet ist. Diese ist haubenartig gestaltet und mit einem Anschlußstutzen 22 versehen. Die haubenartige Auffangeinrichtung 19 hat einen kegeligen Mittelteil 21 mit dem Anschlußstutzen 22. An den durchmessermäßig größeren Endteil des Kegels 21 schließt sich ein die Decke 14 übergreifender verbreiterter unterer Bereich 25 an. Der Kegel 21 geht an der gegenüberliegenden anderen Seitein einen oberen zylindrischen Bereich 26 über. Dieser bildet einen Zwischenraum zur Bohrfutteraufnahme 31. Dieser Zwischenraum zwischen der Innenfläche des zylindrischen Bereiches 26 der haubenartigen Auffangvorrichtung 19 und der Außenfläche der Bohrfutteraufnahme dient zur Unterbringung eines Kugellagers 30. Im Ausführungsbeispiel nach der Fig. 1 der Zeichnung dienen zur Lagesicherung des Kugellagers 30 in bekannter Weise mehrere unterschiedlich dimensionierte Sicherungsringe 28 bzw. 29. Daß diese Sicherungsringe 28, 29 unterschiedlichen Durchmesser aufweisen und an unterschiedlichen Stellen liegen, ergibt sich ferner aus der Fig. 2 der Zeichnung. Bei einer abgewandelten Ausführungsform der Erfindung nach der Fig. 4 der Zeichnung wird auf diese Sicherungsringe 28 und 29 ganz verzichtet.

Die schon erwähnte Bohrfutteraufnahme 31 hat ein oberes Ende 32. Dort befindet sich der Anschlußbereich 33 für eine handelsübliche, in der Fig. 1 nicht dargestellte Bohrmaschine. Der mit 34 bezeichnete Mittelbereich der Bohrfutteraufnahme 31 ist verdickt ausgebildet. Unterhalb dieser Verdickung 34 befindet sich ein Halteelement 37 bekannter Bauart. Mit diesem wird das rückwärtige Ende eines Zentrierbohrers in bekannter Weise lösbar gehalten. Der untere Bereich 35 der Bohrfutteraufnahme 31 hat ein Außengewinde 36, das mit dem schon erwähnten Innengewinde 16 des Anschlußstutzens 15 der Schleifkrone in der in Fig. 1 dargestellten Weise zusammenwirkt.

In den Fig. 4 und 5 der Zeichnung ist eine abgewandelte Ausführungsform der Auffangeinrichtung 19 wiedergegeben. Diese unterscheidet sich von derjenigen gemäß der Fig. 1 der Zeichnung im wesentlichen dadurch, daß dem Anschlußstutzen 22 der haubenartigen Auffangeinrichtung 19 lösbar ein generell mit 23 bezeichneter Einsatzkörper zugeordnet ist, der seinerseits mit der Umfangsfläche eines Saugschlauches eines Staubsaugers dichtend zusammenwirkt. In dem gewählten Ausführungsbeispiel ist dieser Einsatzkörper 43 als Gummieinsatz ausgebildet, der einen Befestigungsteil 44 und einen Dichtungsteil 46 aufweist. Zu dem Dichtungsteil 46 gehört wenigstens eine Dichtlippe 47, die einen Durchbruch 48 hat, dessen Durchmesser kleiner ist als der des einzuführenden Saugschlauches. Im Ausführungsbeispiel nach der Fig. 4 der Zeichnung sind mehrere Dichtlippen 47 hintereinander angeordnet, und zwar insgesamt zwei solcher Dichtlippen 47. Bei Bedarf können selbstverständlich auch mehr als zwei Dichtlippen hintereinander angeordnet sein. Die beiden Dichtlippen 47 des Einsatzkörpers 43 unterscheiden sich insbesondere dadurch, daß sie unterschiedlich große Durchbrüche 48 haben.

An der Außenfläche des Befestigungsteiles 44 des Einsatzkörpers ist ein Verbindungsteil 45 vorgesehen. Dieser Verbindungsteil 45 hat einen vorspringenden Abstützflansch 51, der sich an die Stirnfläche 52 des Anschlußstutzens 22 anlegen kann.

Um eine lösbare Verbindung zwischen dem Einsatzkörper 43 einerseits und der Innenfläche des Anschlußstutzens 22 andererseits zu erhalten, sind grundsätzlich bekannte Haltemittel 49 vorgesehen. Diese können sowohl dem Einsatzkörper 43 als auch dem Anschlußstutzen 20 zugeordnet sein. Selbstverständlich ist es auch möglich, an beiden Teilen zusammenwirkende Bereiche von Haltemitteln anzuordnen. Bei diesen Haltemitteln kann es sich um grundsätzlich bekannte handeln, beispielsweise um im Querschnitt sägezahnartige Vorsprünge, die sich in den gummiartigen Einsatzkörper 43 eingraben können. Daneben ist aber auch die Verwendung von Rasten und Gegenrasten möglich.

Diese Ausführungsform der Auffangeinrichtung 19 hat den Vorteil, daß wegen des Einsatzkörpers 43 unterschiedlich dicke Saugschläuche aufgenommen werden können. Damit wird den Bedürfnissen der Praxis Rechnung getragen. Darüber hinaus kann nach Entfernen des Einsatzkörpers 43 die Diamantschleifkrone problemlos vom Adapter oder von der Bohrmaschinenspindel gelöst werden. Dies kann beispielsweise in bekannter Weise mit einem Maulschlüssel erfolgen. Der entfernte Einsatzkörper 43 kann nach Beendigung der durchzuführenden Arbeiten wieder leicht in den Anschlußstutzen 22 eingesetzt werden.

Bei dieser Ausführungsform der Auffangeinrichtung 19 wird auf zusätzliche Sicherungsringe 28 bzw. 29 zur Lagesicherung des Kugellagers 30 verzichtet. Um dieses zu erreichen, ist im zylindrischen Bereich 26 der Auffangeinrichtung 19 ein Unterbringungsraum 38 für dieses Kugellager angeordnet. Dieses Kugellager kann sich einerseits an einer Auflagefläche 41 und andererseits an Vorsprüngen 42 der Innenwand des zylindrischen Bereiches 26 abstützen. Sowohl die Auflagefläche 41 als auch die Vorsprünge 42 sind dabei Bestandteile der Auffangvorrichtung 19.

Die Fig. 3 der Zeichnung läßt erkennen, aß durch die Anordnung von mehreren Durchbrechungen 17 im Bereich der Decke 14 der Schleifkrone 10 im Vergleich mit dem Bekannten eine sehr große Querschnittsfläche zum Durchtritt des abzusaugenden Bohrkleins zur Verfügung steht. Die den Durchbrechungen 17 nachgeschaltete, erfindungsgemäße haubenartige Absaugeinrichtung hat den Vorteil, daß das durch die Durchbrechungen 17 durchtretende Bohrklein auf kürzestem Wege in den Anschlußstutzen 22 gelangt und von dort aus mittels eines bekannten Staubsaugers abgesaugt werden kann. Die erfindungsgemäße Ausbildung der Schleifkrone läßt ferner die Verwendung eines an sich bekannten Zentrierbohrers zu.

Wie bereits erwähnt, sind die dargestellten Ausführungen nurbeispielsweise Verwirklichungen der Erfindung und diese nicht darauf beschränkt. Vielmehr sind noch mancherlei andere Ausführungen und Anwendungen möglich. Insbesondere kann die Anzahl der Durchbrechungen 17 in der Decke 14 der Schleifkrone 10 abweichend vom dargestellten Ausführungsbeispiel gewählt werden. Dabei kann die Querschnittsgestaltung der Durchbrechungen auch abweichend von der dargestellten Kreisform ausgebildet sein. Es ist ferner möglich, mehr als sechs Durchbrechungen in der Decke 14 der Schleifkrone anzuordnen. Abgeändert werden kann auch die Ausbildung der Auffangeinrichtung. Hier kann insbesondere der kegelige Teil einen anderen Steigungswinkel als dargestellt erhalten. Und schließlich ist es auch möglich, den Einsatzkörper 43 zu verändern. In Sonderfällen genügt die Verwendung einer einzigen Dichtlippe, die sich dichtend an den einzuführenden Saugschlauch eines Staubsaugers anschließt. Darüber hinaus ist es aber auch möglich, mehr als zwei Dichtlippen ein und demselben Einsatzkörper 43 zuzuordnen.

### Bezugszeichenliste :

- 1o -: Schleifkrone (Diamantschleifkrone)
- 11 -: Umfangswand (von 1o)
- 12 -: freies Ende (von 1o)
- 13 -: Verdickung (an 12)
- 14 -: Decke (von 1o)
- 15 -: Stutzen
- 16 -: Innengewinde (von 15)
- 17 -: Durchbrechung (in 14)
- 18 -: obere Erweiterung (von 17)
- 19 -: Auffangeinrichtung
- 2o -: Aufnahmeraum (von 19)
- 21 -: kegeliger Mittelteil (von 19)
- 22 -: Anschlußstutzen (an 21)
- 23 -: vordere Öffnung (von 22)
- 24 -: durchgehende Bohrung (von 22)
- 25 -: verbreiterter unterer Bereich (von 19)
- 26 -: oberer zylindrischer Bereich (von 19)
- 27 -: Öffnung (von 26)
- 28 -: Sicherungsring (groß)
- 29 -: Sicherungsring (klein)
- 3o -: Kugellager
- 31 -: Bohrfutteraufnahme
- 32 -: oberes Ende (von 31)
- 33 -: Anschlußbereich (für Bohrmaschine)
- 34 -: verdickter Mittelbereich (von 31)
- 35 -: unterer Bereich (von 31)
- 36 -: Außengewinde (an 35)
- 37 -: Halteelement (für Zentrierbohrer)
- 39 -: Boden (von 38)
- 4o -: Durchbrechung (in 39)
- 41 -: Auflagefläche (für 3o)
- 42 -: Vorsprünge
- 43 -: Einsatzkörper (in 22)
- 44 -: Befestigungsteil (von 43)
- 45 -: Verbindungsteil (von 43)
- 46 -: Dichtungsteil (von 43)
- 47 -: Dichtlippe (von 46)
- 48 -: Durchbruch (in 46)
- 49 -: Haltemittel (für 43)
- 5o -: Einführungsöffnung (von 22) (Fig. 4 und 5)
- 51 -: Abstützflansch (von 43)
- 52 -: Stirnfläche (von 22)
- M _: Mittelpunkt (von 14)

## Patentansprüche

1. Schleifkrone, insbesondere Diamantschleifkrone für Mauerwerks-Einbauöffnungen im Trockenschliffverfahren, die als im Querschnitt U-förmiger Körper ausgebildet und lösbar mit einem Zwischenstück, wie einer Bohrfutteraufnahme zur Kupplung mit einer Bohrmaschine verbindbar ist, wobei das Zwischenstück drehbar und dicht in einem Hohlkörper gelagert ist, und wobei die Schleifkrone mit einem Zentrierbohrer und mit im Bereich ihrer Oberseite liegenden Ableitungen für Bohrstaub versehen ist, und die einen an einen Staubsauger od.dgl. anschließbaren Ableitungsdurchgang aufweist,
**dadurch gekennzeichnet,**
daß die Decke (14) der Schleifkrone (10) selbst die außerhalb ihrer Mitte liegenden Durchbrechungen (17) aufweist, und daß diesen Durchbrechungen (17) der Schleifkrone (10) eine haubenartige Auffangeinrichtung (19) derart nachgeschaltet ist, daß ihr unterer Bereich (25) die Decke (14) der Schleifkrone (10) allseitig übergreift, und daß sich daran ein kegeliger Mittelteil (21) mit einem großen Aufnahmeraum (20) für den Bohrstaub od.dgl. anschließt, dessen Umfangsfläche an einer Stelle für die Schaffung eines Einlasses für einen Anschluß-Stutzen (22) unterbrochen ist.

2. Schleifkrone nach Anspruch 1, dadurch gekennzeichnet, daß sich an den durchmessermäßig kleineren Endteil des Kegels der Auffangeinrichtung (19) ein oberer zylindrischer Bereich (26) anschließt, der einen Zwischenraum zur Unterbringung der Verbindungsmittel zwischen der Bohrfutteraufnahme (31) und der Auffangeinrichtung (19) freiläßt.

3. Schleifkrone nach Anspruch 2, dadurch gekennzeichnet, daß als Verbindungsmittel in an sich bekannter Weise ein Kugellager (30) dient, das durch mehrere Sicherungsringe (28 bzw. 29) oder durch mehrere Vorsprünge (42) lagegesichert ist.

4. Schleifkrone nach Anspruch 1, dadurch gekennzeichnet, daß die Decke (14) der Schleifkrone (10) in ihrer Mitte liegend einen Stutzen (15) aufweist, dessen Innengewinde (16) mit dem Außengewinde (36) der Bohrfutteraufnahme (31) verbindbar ist, und daß die durchlaufende Bohrung des Stutzens (15) von dem rückwärtigen Ende eines Zentrierbohrers durchgriffen wird, der durch ein Halteelement (37) der Bohrfutteraufnahme (31) lagegesichert ist.

5. Schleifkrone nach einem oder mehreren der vorangehenden Ansprüche, dadurch gekennzeichnet, daß die Durchbrechungen (17) in der kreisförmigen Decke (14) der Schleifkrone (10) konzentrisch zum Mittelpunkt (M) der Decke (14) angeordnet, in Draufsicht gesehen kreisförmig gestaltet und untereinander gleichgestaltet sind, sowie in regelmäßiger Anordnung im Bezug auf den Mittelpunkt (M) der Decke (14) der Schleifkrone (10) liegen.

6. Schleifkrone nach Anspruch 1 und 2, dadurch gekennzeichnet, daß dem Anschlußstutzen (22) der haubenartigen Auffangeinrichtung (19) lösbar ein Einsatzkörper (43) zugeordnet ist, der seinerseits mit der Umfangsfläche eines Saugschlauches dichtend zusammenwirkt.

7. Schleifkrone nach Anspruch 6, dadurch gekennzeichnet, daß der Einsatzkörper (43) als Gummieinsatz ausgebildet ist, der einen Befestigungsteil (44) und einen Dichtungsteil (46) aufweist.

8. Schleifkrone nach den Ansprüchen 6 und 7, dadurch gekennzeichnet, daß der Dichtungsteil (46) wenigstens eine Dichtlippe (47) aufweist, die einen Durchbruch (48) hat, dessen Durchmesser kleiner ist als der des einzuführenden Saugschlauches.

9. Schleifkrone nach den Ansprüchen 6 bis 8, gekennzeichnet durch die Hintereinanderanordnung von mehreren Dichtlippen (47) am Einsatzkörper (43).

10. Schleifkrone nach den Ansprüchen 6 bis 9, dadurch gekennzeichnet, daß an der Außenfläche des Befestigungsteiles (44) des Einsatzkörpers Verbindungselemente angeordnet sind, die mit Haltemitteln (49) des Anschlußstutzens (22) zusammenwirken.

11. Schleifkrone nach Anspruch 1 und 2, dadurch gekennzeichnet, daß im zylindrischen Bereich (26) der Auffangeinrichtung (19) ein Unterbringungsraum (38) für ein Kugellager (30) angeordnet ist, das sich einerseits an einer Auflagefläche (41) und andererseits an Vorsprüngen (42) der Innenwand des zylindrischen Bereiches (26) abstützt.
